# EUROPÄISCHE PATENTSCHRIFT

(11) **EP 2 659 425 B1**
(45) Veröffentlichungstag und Bekanntmachung des Hinweises auf die Patenterteilung: **26.08.2015**
(21) Anmeldenummer: 11804654.9
(22) Anmeldetag: 30.12.2011
(51) Int. Cl.: G06K 7/00

(54) **SMART CARD CONNECTOR MIT KONTAKTWIPPE**
SMART CARD CONNECTOR COMPRISING A CONTACT ROCKER
CONNECTEUR DE CARTE INTELLIGENTE AVEC CONTACT BASCULANT

(30) Priorität: 31.12.2010 DE 102010056600
(43) Veröffentlichungstag der Anmeldung: 06.11.2013
(73) Patentinhaber: Amphenol-Tuchel Electronics GmbH, 74080 Heilbronnn (DE)
(72) Erfinder: BERTSCH, Michael Steffen, 74080 Heilbronn (DE)
(74) Vertreter: Wendels, Stefan
(86) Internationale Anmeldenummer: PCT/EP2011/006611
(87) Internationale Veröffentlichungsnummer: WO 2012/089347

(56) Entgegenhaltungen:
- WO-A1-98/24045
- US-B1- 6 796 842

## Beschreibung

Die Erfindung bezieht sich auf eine Vorrichtung zur Kontaktierung einer Chipkarte bzw. einer Smart Card (kurz: SC oder Karte) mittels eines Smart Card Connectors (kurz: SCC) oder Chipkartenlesers.

Smart Card Connectoren besitzen im Allgemeinen ein Gehäuse in dem Kontaktelemente, insbesondere Lesekontaktelemente (kurz: LKE) angeordnet sind, die mit auf der Smart Card vorgesehen Kartenkontakten oder Kontaktflächen (kurz: KK) in Eingriff gebracht werden um die in der Karte gespeicherte Information auszulesen oder um Information in diese einzuspeisen. Der Smart Card Connector weist im Allgemeinen Kontaktanschlüsse auf, die die Verbindung zu irgendwelchen Schaltungen oder Geräten vorsehen, die mit den Kartenkontakten verbunden werden sollen.

Aus der US 6,796,842 B1 und aus der WO 98/24045 A1 sind Smart Card Connectoren bekannt, die einen Kontaktträger und Lesekontaktelemente aufweisen, wobei die Lesekontaktelemente mittels einer Vorrichtung von einer Karte, aus ihrer vorgespannten Position in eine Leseposition betätigbar sind.

Der erfindungsgemäße Smart Card Connector weist einen Kontaktträger auf, der mit Lesekontaktelementen bestückt ist. Letztere besitzen an einem zur Kontaktierung der Kartenkontakte dienenden Ende Lesekontakte und am anderen Ende Anschlusskontakte. Vorzugsweise sind die Lesekontaktelemente schräg angeordnet, so dass sich alle Lesekontakte auf einer Linie mit gleichbleibendem Abstand treffen.

Darauffolgend auf die Bestückung des Kontaktträgers mit den Lesekontakte aufweisen Lesekontaktelementen, wird eine Wippe in den Kontaktträger eingeschwenkt und in diesem drehbar verrastet.

Die Wippe weist einen aus Blech gefertigten Grundkörper auf, auf welchem eine isolierende Ansteuerflanken bildende Kunststoffführung für die LKE aufgebracht und befestigt ist.

Um eine Überlastung der Lesekontakte (insbesondere auch in deren Lesestellung) zu vermeiden, besitzt die Wippe einen Endanschlag als Begrenzung.

Beim Erreichen des Endanschlags bzw. der Wippenbegrenzung können Ansteuerflanken der Wippe durch Nachfedern zusätzliche Toleranzen von Karte und Einbau ausgleichen.

Durch die Verwendung einer Wippe kann sich bei in Lesestellung befindlicher Karte keine Kartenauswurfkomponente entwickeln, wie dies beispielsweise bei federbeaufschlagten Schiebern bekannt ist. Dadurch entfallen bei dem erfindungsgemäßen Wippenkonzept zusätzliche Halteelemente wie z.B. Bremsfedern.

Bei bekannten Smart Card Connectoren mit vorgespannt montierten Kontaktelementen, die durch eine Wippe freigegeben werden, kann die Vorspannung der Kontaktelemente beim Lötprozess teilweise verloren gehen, was zu einem Verzug des Kontaktträgers führen kann.

Weitere Vorteile, Ziele und Einzelheiten der Erfindung ergeben sich aus der folgenden Beschreibung eines Ausführungsbeispiels anhand der Zeichnung; in der Zeichnung zeigt:
Fig.1 eine perspektivische Draufsicht schräg von vorne oben auf einen erfindungsgemäßen Smart Card Connector;
Fig. 2 eine Draufsicht auf die Unterseite des Smart Card Connectors der Fig. 1;
Fig. 3 den Smart Card Connector der Fig. 1 bei entferntem Deckel in seiner Ausgangsstellung bei nicht eingesetzter Karte;
Fig. 4 den Smart Card Connector der Fig. 3 wobei hier eine Smart Card eingesetzt zu denken ist;
Fig. 5 eine eine Draufsicht auf eine Oberseite einer Wippe;
Fig. 6 eine eine Draufsicht auf eine Unterseite der Wippe der Fig. 5;
Fig. 7 einen Schnitt längs der Linie B-B, gemäß welchem noch keine Karte in den Smart Card Connector eingesetzt ist, so dass die Wippe sich in ihrer Ausgangsstellung befindet und die Lesekontaktelemente noch nicht in ihre Kontaktposition gebracht sind;
Fig. 8 eine Schnittansicht ähnlich der Fig. 7, wobei hier die Karte eingesetzt zu denken ist und sich in ihrer Lesestellung befände, in der die Lesekontaktelemente sich in ihrer Kontaktposition befinden würden wenn die Karte gezeigt wäre;
Fig. 9 eine schematische Draufsicht auf den Smart Card Connector der Figuren 1 - 8.

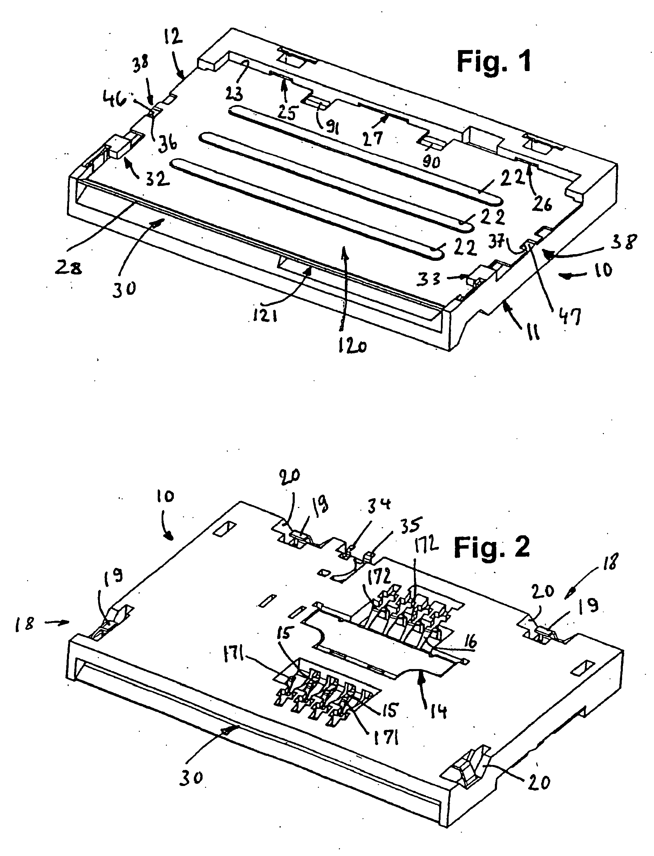

In den Figuren 1 - 9 ist ein Smart Card Connector 10 dargestellt, der einen Kontaktaktträger 11 sowie einen diesen an seiner Kontaktträgeroberseite 139 abschließenden Deckel 12 aufweist. Zwischen der Oberseite 139 und einer Unterseite des Deckels 12 wird ein Kartenaufnahmeraum für eine nicht gezeigte einzusetzende Smart Card (im folgenden Karte) gebildet.

Im Smart Card Connector 10, insbesondere in dessen Kontaktträger 11 eingesetzt, ist eine Lesekontaktelementanhebevorrichtung vorzugsweise in der Form einer Wippe 14 drehbar gelagert. Diese wird beim Einschieben einer Karte in den Kartenaufnahmeraum verdreht und bewirkt, dass die vorzugsweise in zwei Reihen 15 und 16 angeordneten Lesekontaktelemente 1, 2 betätigt, vorzugweise angehoben, werden, um mit ihren Lesekontakten 65 die auf der Karte vorgesehenen Kartenkontakte zu kontaktieren.

Die noch näher zu beschreibenden Kontaktelemente 1 ,2 besitzen wie auch in Fig. 2 gezeigt Anachlusskontakte 171, 172, die mit einem angeschlossenen Gerät verbindbar sind, welches Zugriff zu auf der Karte gespeicherten Information hat.

### Der Deckel 12

Der Deckel 12 ist am Kontaktträger 11 durch Deckelverriegelungsmittel 18 befestigt, die deckelseitige Verriegelungsmittel 19 in der Form von Federarmen und kontaktträgerseitige Verriegelungsmittel 20 in der Form von Ausnehmungen aufweisen. Der vorzugsweise aus Blech bestehende Deckel 12 weist an seiner Oberseite 120 ausgebildete Rillen 22 auf, die an der Deckelunterseite 121 Wölbungen bilden, welche mit den Kontaktelementen 1, 2 zusammenarbeiten können.

Der Deckel 12 weist eine hintere Anschlagkante 23 auf. Ferner sind Deckelhalterungen 25, 26, 27 vorgesehen um die Hinterkante des Deckels 12 am Kontaktträger 11 zu halten. Der Deckel 12 bildet entgegengesetzt zu der hinteren Anschlagkante eine freiliegend, gewölbte Vorderkante 28, die einen Karteneinführschlitz 30 nach oben begrenzt Ferner sind an entgegengesetzten Längsseiten des Deckels 12 seitliche Deckelhalterungen 32 und 33 vorgesehen.

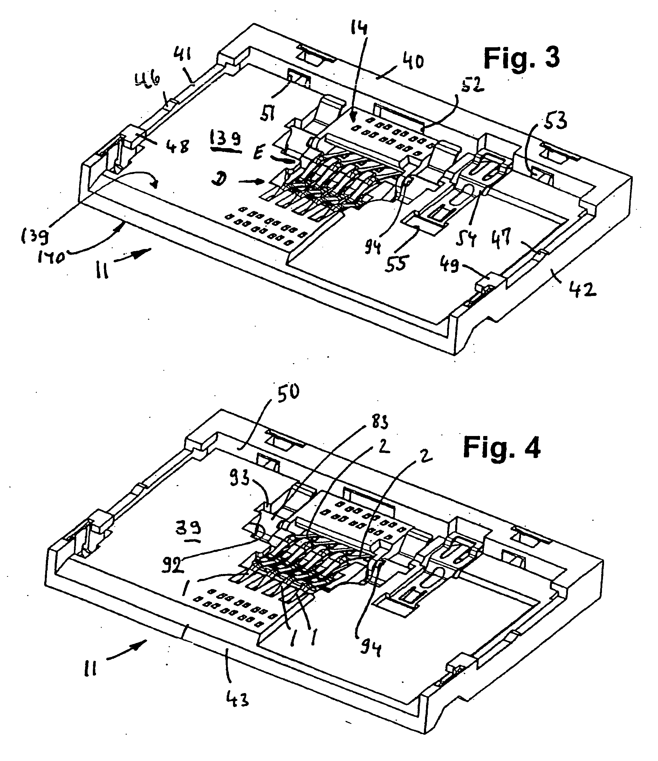

Man erkennt in Fig. 2 zwei Anschlusskontakte 34, 35 eines in Fig. 3 zu sehenden Kartenanwesenheitsschalters 54. Diese Anschlusskontakte 34, 35 liegen vorzugsweise auf der gleichen Höhe oder auf dem gleichen Niveau wie die Anschlusskontakte 171, 172 der Kontaktelemente 1, 2.

Beidseitig, diametral gegenüber bildet der Deckel 12 jeweils eine Ausnehmung 36, 37 um zusammen mit noch zu beschreibenden Nocken 46, 47 des Kontaktträgers 11 Deckelverrastungen 38 zu bilden.

### Der Kontaktträger 11

Der Kontaktträger 11 besitzt als Grundkörper eine aus Kunststoff bestehende Kontaktträgerplatte 39, die eine Oberseite und eine Unterseite aufweist. Etwa mittig ist in der Kontaktträgerplatte 39 eine diese durchsetzende Wippenöffnung 92 ausgebildet die zur Aufnahme und Lagerung der Wippe 14 dient. Die Kontaktträgerplatte 39 ist vorzugsweise einstückig mit einer Rückwand 40, einer linken Seitenwand 41 und einer rechten Seitenwand 42 geformt. An einer Vorderseite 43 der Kontaktträgerplatte 39 ist eine Schrägfläche gebildet, die das Einsetzen der Karte in den Karteneinführschlitz 30 erleichtert.

An den Oberseiten der linken und rechten Seitenwände 41, 42 ist jeweils, wie bereits erwähnt, ein Nocken 46, 47 nach oben ragend ausgebildet. Die beiden Seitenwände 41, 42 bilden nach innen weisende Vorsprünge 48, 49 welche den Deckel 12 nach obenhin festlegen. Die Rückwand 40 bildet eine Kartenanschlagfläche 50 an der die Karte, wenn sie in ihre Lesestellung eingeschoben ist, anliegt. In der senkrechten Wand der Rückwand 40 sind ferner Löcher zum Beispiel drei Löcher 51, 52, 53 beabstandet ausgebildet, in welche zum Zwecke der Deckelhalterung vom Deckel gebildete Deckelvorsprünge hineinragen, wenn der Deckel 12 sich in seiner Befestigungsposition befindet. Der bereits erwähnte Kartenanwesenheitsschalter 54 ist in eine Ausnehmung 55 in der Kontaktträgerplatte 39 eingesetzt und darin befestigt.

### Die Kontaktelemente 1, 2

Die Kontaktelemente 1, 2 die insbesondere als Lesekontaktelemente dienen sind in den Kontaktträger 11, speziell die Kontaktträgerplatte 39 eingesetzt und darin verrastet.

Die Kontaktelemente 1, 2 sind vorzugsweise nicht in Richtung zu den Lesekontakten 1, 2 hin vorgespannt. Vorzugsweise sind (vgl. Fig. 3) die LKE 1, 2 in zwei Gruppen D (LKE 1) und E (LKE 2) angeordnet. Die LKE1, 2 jeder Gruppe verlaufen parallel zueinander, wobei sich alle Anschlusskontaktenden jeder Gruppe D, E (vergleiche dazu die Figuren 3 und 4) auf einer Linie treffen und gleichmäßig beabstandet sind.

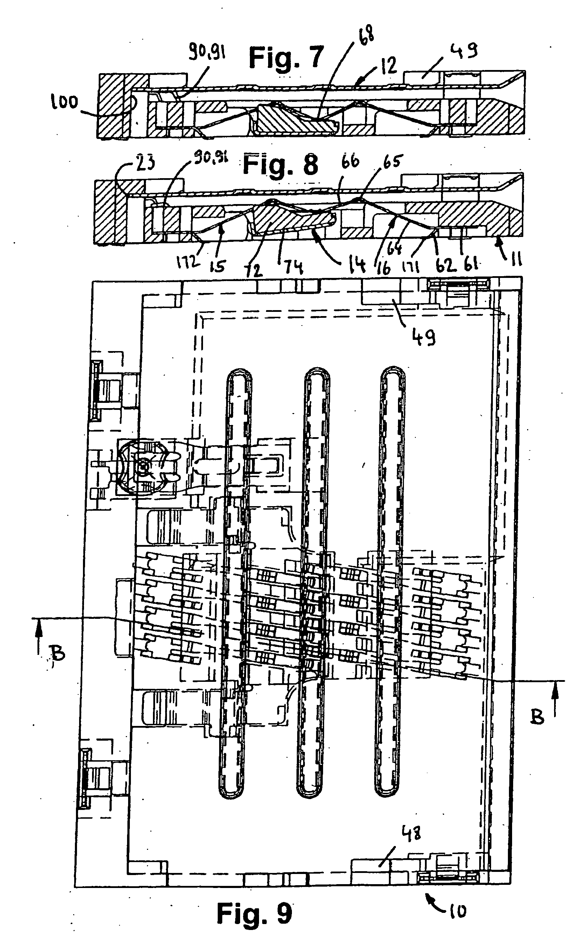

Im Einzelnen weist jedes Lesekontaktelement 1, 2, wie zum Beispiel in Figur 8 gezeigt, einen Befestigungsabschnitt 61 auf, der die Befestigung des Kontaktelements 1, 2 an der Kontaktträgerplatte 39 in der gezeigten Weise sicherstellt. Vorzugsweise benachbart zum Befestigungsabschnitt 61 bildet das Kontaktelement 1, 2 einen Anschlussabschnitt 62 der vorzugsweise an seinem freien Ende einen Anschlusskontakt (als Kontaktende) 171, 172 bildet.

An den Befestigungsabschnitt 61 schließt sich vorzugsweise abgewinkelt gegenüber dem Befestigungsabschnitt 61 verlaufend ein Lesekontaktabschnitt 64 an, der an seinem in Figur 8 gezeigten höchsten Ende, einen Lesekontakt 65 vorzugsweise in der Form einer Kontaktkuppe bildet. Anschließend an den Lesekontakt 65 bildet das Kontaktelement 1, 2 einen schräg nach unten verlaufenden Betätigungsabschnitt 66 der vorzugsweise an seinem freien Ende in einem Auflage- bzw. Betätigungsende vorzugsweise in der Form einer Abrundung 68 endet, die vorzugsweise federnd auf der Wippe 14 aufliegt.

### Die Wippe 14

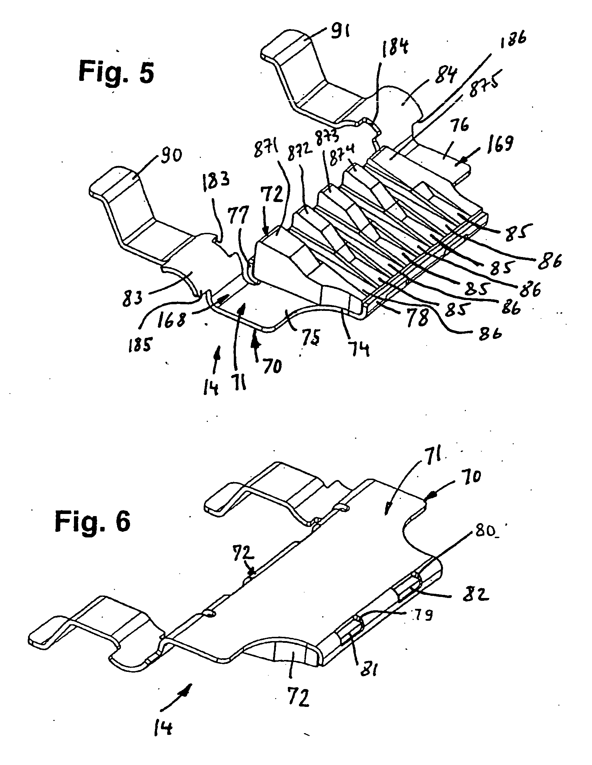

Die detailliert in den Fig. 5 und 6 gezeigte Wippe 14 besitzt einen Grundköper 70 der vorzugsweise durch ein Lagerblech 71 gebildet wird. Am Grundkörper 70 bzw. dem diesen Grundkörper 70bildenden Lagerblech 71 ist eine Kontaktführung vorzugsweise in der Form eines Führungskörpers 72 befestigt. Die vorzugsweise aus Kunststoff bestehende Kontaktführung 72 wird an ihrer in Fig. 5 gezeigten Unterseite durch einen Tragabschnitt 74 des Grundkörpers 70 getragen. Der Tragabschnitt 74 weist auf seinen beiden Querseiten einen Seitenabschnitt 75 bzw. einen Seitenabschnitt 76 auf. Der Seitenabschnitt 75 ist ein Teil eines vom Grundkörper 70 gebildeten Seitenarms 168 und der Seitenabschnitt 169 ist ein Teil eines vom Grundkörper 70 gebildeten Seitenarms 69. Der Tragabschnitt 74 bildet ferner um die Rückseite bzw. die Vorderseite der Kontaktführung 72 herumgelegte Umschließungsabschnitte 77 bzw. 78. Der Umschließungsabschnitt ist wie in Fig. 6 gezeigt ausgebildet. Der vordere Umschließungsabschnitt 78 weißt zwei Schlitze 79, 80 auf, in die Nasen 81, 82 des Kunststoffführungskörpers zum Zwecke der Halterung ragen.

Die beiden Seitenarme 168, 169 sind vorzugsweise spiegelbildlich aber identisch ausgebildet. Jeder der Seitenarme 168 bzw. 169 weist anschließend an den Seitenabschnitt 75, 76 einen Lagerabschnitt 83, 84 auf, an den sich wiederum jeweils ein Betätigungsabschnitt 90, 91 anschließt. Die Betätigungsabschnitte 90, 91 sind, wie gezeigt, zweifach abgewinkelt.

Die Lagerabschnitte 83 bzw. 84 bilden jeweils einen seitlich nach außen verlaufenden Vorsprung 185 bzw. 186 und jeweils einen nach innen weisenden Ausschnitt 183 bzw. 184.

Die vorzugsweise aus isolierendem Kunststoff bestehende Kontaktführung 72 bildet, wie insbesondere Fig. 5 zeigt, nach oben ragende, bezüglich einander seitlich in Querrichtung beabstandete Vorsprünge 871, 872, 873, 874, 875.

Zwischen den Vorsprüngen 871 - 875 sind jeweils Ansteuerflanken 85, das heißt Anlage/Anhebflächen für die Kontaktelemente 1, 2 ausgebildet.

Zwischen den Vorsprüngen 871 bis 875 sind Ansteuerflanken 85 für die Kontaktelemente 1 der ersten Gruppe D und davon in Querrichtung beabstandet sind Ansteuerflanken 86 für die Kontaktelemente 2 der zweiten Gruppe E von Kontaktelementen 2 vorgesehen.

Die in der Kontaktträgerplatte 39 drehbar zu lagernde Wippe 14 wird in die Wippenöffnung 92 insbesondere in der Kontaktträgerplatte 39 geformte Lagerausnehmungen 93, 94 eingesetzt, eingeschwenkt und verrastet in einer Raststellung. In dieser ist die Wippe 14 drehbar, um die in den Figuren 7 und 8 gezeigten Kontaktelementpositionen zu erreichen.

Die Drehlagerung der Wippe 14 erfolgt im Einzelnen durch ihre beiden seitlich beabstandeten Lagerabschnitte 83, 84 die mit seitlich beabstandeten Lagerausnehmungen in den entsprechenden Seitenwänden zusammenarbeiten.

Um ihre Lagerposition zu erreichen wird die Wippe 14 in einer nahezu senkrechten Position derart in die Wippenöffnung 92 und die Lagerausnehmungen 93, 94 eingesetzt, dass die Lagerabschnitte 83, 84 durch die von den Lageausnehmungen gebildeten 93, 94 hindurchgehen um dann an entsprechend ausgebildeten Flächen des Kontaktträgers derart einzurasten, eine Drehbewegung der Wippe 14 möglich ist, die beim Einschieben der Karte notwendig ist, um die Kontaktelemente 1, 2 in den Kartenaufnahmeraum hin anzuheben, sodass diese mit den Kartenkontakten in Berührung kommen.

Das Ergebnis der Drehbewegung der Wippe 14 ist insbesondere in den Fig. 7 und 8 veranschaulicht. In Figur 7 befindet sich die Wippe 14 in ihrer nicht verschwenkten Position, wo die entsprechenden Kontaktelemente 1, 2 nicht angehoben sind. In Fig. 8 ist die Wippe verdreht dargestellt. Es ist zu erkennen, dass die Kontaktelemente 1, 2 angehoben sind, sodass deren Kontaktkuppen bzw. die Lesekontakte 65 die Kartenkontakte kontaktieren würden, wenn die Karte auch eingezeichnet wäre.

Die Drehbewegung der Wippe 14 wird beim Einführen der Karte dann eingeleitet, wenn die Vorderkante der Karte auf die Betätigungsabschnitte 90, 91 auftrifft. Vergleiche dazu auch Fig. 7. In dieser Stellung der Karte, liegt diese an einer vom Kontaktträger 11 gebildeten Anlagefläche 100 an (vergleiche dazu Fig. 7).

Durch die Drehbewegung der Wippe 14 werden die mit ihrem Betätigungsabschnitt 66, insbesondere den Abrundungen 68, auf den Ansteuerflanken 85, 86 aufliegenden Kontaktelemente 1, 2 angehoben um die Kartenkontakte zu kontaktieren.

Bei einer Entnahme der Karte wird die Wippe 14, in die in Fig. 7 gezeigte Position durch die Federkraft der aufliegenden Kontaktelemente 1 und 2 zurückgebracht.

Um eine Überlastung der Lesekontakte 1, 2 zu vermeiden, besitzt die Wippe 14 einen Endanschlag als Begrenzung. Beim Erreichen der Begrenzung können die Ansteuerflanken, durch Nachfedern zusätzliche Toleranzen von Karte und Einbau ausgleichen.

Das erfindungsgemäße Wippenkonzept stellt sicher, dass auch die in der Lesestellung befindliche Karte keine eine Auswurfkomponente besitzende Kraft einwirkt, wie dies bei anderen Chip Kartenlesern oder Smart Card Connectoren der Fall ist. Dadurch entfallen zusätzliche Halteelemente, wie z. B. Bremsfedern.

Bei der erfindungsgemäßen Wippenkonstruktion müssen die Kontaktelemente nicht vorgespannt montiert werden. Wenn Kartenelemente vorgespannt montiert werden müssen, so besteht die Gefahr, dass bei einem Lötprzess die Vorspannung der Kontaktelemente teilweise verloren geht, was zu einem "Verzug" des Kontaktträgers führen kann.

Dadurch, dass in der Grundstellung- oder Ausgangsstellung, vgl. Fig. 7, Kontakte bzw. Kontaktelemente vertieft im Kontaktträger 11 liegen, kann die Karte ohne Reibung in den Smart Card Reader gesteckt werden. Erst kurz vor dem Kartenendanschlag 100 werden die Kontaktelemente 1, 2, insbesondere die Lesekontakte 65, d. h. die Kontaktflächen der Kontaktelemente 1, 2 aktiv durch die Wippe angehoben. In der Leseposition wird die Karte durch die Klemmkraft, ausgeübt durch die Lesekontaktelemente gehalten.

### Bezugszeichenliste

- 1: Kontaktelement
- 2: Kontaktelement
- 10: Smart Card Connector
- 11: Kontaktträger
- 12: Deckel
- 14: Wippe

### Der Deckel 12

- 5: erster Reihe von Kontaktelementen
- 16: zweite Reihe von Kontaktelementen
- 18: Deckelverriegelungsmittel
- 19: Deckelseitige Verriegelungsmittel, Federarm
- 20: Kontaktträgerseitige Verriegelungsmittel, Ausnehmung
- 22: Rillen
- 23: Hintere Anschlagskante
- 25: Deckelhalterung
- 26: Deckelhalterung
- 27: Deckelhalterung
- 28: gewölbte Vorderkante
- 30: Karteneinführschlitz
- 32: seitliche Deckelhalterung
- 33: seitliche Deckelhalterung
- 34: Anschlusskontakt des KAS
- 35: Anschlusskontakt des KAS
- 36: Ausnehmung
- 37: Ausnehmung
- 38: Deckelverrastungen
- 39: Kotaktträgerplatte
- 54: Kartenanwesenheitsschalter (KAS)
- 139: Oberseite des Kontaktträgers
- 140: Unterseite des Kontaktträgers
- 171: Anschlusskontakte
- 172: Anschlusskontakte

### Der Kontaktträger 11

- 39: Kontaktträgerplatte
- 40: Rückwand
- 41: linke Seitenwand
- 42: rechte Seitenwand
- 43: Vorderseite
- 46: Nocken
- 47: Nocken
- 48: Vorsprung
- 49: Vorsprung
- 50: Kartenanschlagfläche
- 51: Loch
- 52: Loch
- 53: Loch
- 54: Kartenanwesenheitsschalter
- 55: Ausnehmung

### Die Kontaktelemente 1, 2

- 61: Befestigungsabschnitt
- 62: Anschlussabschnitt
- 171, 172: Anschlusskontakt
- 64: Lesekontaktabschnitt
- 65: Lesekontakt, Kontaktkuppe
- 66: Betätigungsabschnitt
- 68: Auflage- bzw. Betätigungsende in Form einerAbrundung
- 70: Grundkörper der Wippe
- 71: Lagerblech
- 72: Kontaktführung, Führungskörper
- 74: Tragabschnitt
- 75: Seitenabschnitt als Teil eines Seitenarms 68
- 76: Seitenabschnitt als Teil eines Seitenarms 69
- 77: Umschließungsabschnitt
- 78: Umschließungsabschnitt
- 79: Schlitz
- 80: Schlitz
- 81: Nase
- 82: Nase
- 83: Lagerabschnitt
- 84: Lagerabschnitt
- 85: Ansteuerflanken; Anlage/Anhebeflächen für Kontaktelemente
- 86: Ansteuerflanken; Anlage/Anhebeflächen für Kontaktelemente
- 90: Betätigungsabschnitt
- 91: Betätigungsabschnitt
- 92: Wippenöffnung
- 93: Lagerausnehmung
- 94: Lagerausnehmung
- 100: Endanschlag
- 120: Deckeloberseite
- 121: Deckelunterseite
- 139: Kontaktträgeroberseite
- 140: Kontaktträgerunterseite
- 168: Seitenarm
- 169: Seitenarm
- 183: Ausschnitt
- 184: Ausschnitt
- 185: Vorsprung
- 186: Vorsprung
- 871 - 875: Vorsprünge

## Patentansprüche

1. Smart Card Connector (10) der Folgendes aufweist:
einen Kontaktträger (11) der Lesekontaktelemente (1, 2) trägt,
einen Deckel (12) der über einer Oberseite (139) des Kontaktträgers (11) an diesem befestigt ist und einen Kartenaufnahmeraum bildet, **dadurch gekennzeichnet, dass** der Smart Card Connector (10) eine Lesekontaktelementanhebvorrichtung (14), die schwenkbar im Kontaktträger gelagert ist,
aufweist, wobei die Lesekontaktelementanhebvorrichtung (14) für die Lesekontaktelemente (1, 2) Anlage/Anhebflächen (85, 86) auf denen die Lesekontaktelemente (1, 2) aufliegen ausbildet,
wobei beim Einschleben einer auf die Anhebvorrichtung (14) auftreffenden Karte die Lesekontaktelemente (1, 2) angehoben und mit den Kartenkontakten in Kontaktberührung gebracht werden.

2. Smart Card Connector (10) nach Anspruch 1, wobei die Lesekontaktelementanhebvorrichtung (14) eine Wippe (14) ist und wobei die Anlage/Anhebflächen (85, 86) als Ansteuerflanken an der Wippe (14) ausgebildet sind.

3. Smart Card Connector (10) nach Anspruch 2, wobei die Wippe (14) einen aus Blech gefertigten Grundkörper aufweist, auf welchem eine die isolierenden Ansteuerflanken bildende Kunststoffführung (72) für die Lesekontaktelemente (1, 2) aufgebracht und befestigt ist.

4. Smart Card Connector (10) nach Anspruch 1, wobei um eine Überlastung der Lesekontakte zu vermeiden, die Wippe einen Endanschlag als Begrenzung besitzt, sodass beim Erreichen des Endanschlags bzw. der Wippenbegrenzung der Wippe durch Nachfedern der Ansteuerflanken der Wippe zusätzliche Toleranzen von Karte und Einbau ausgleichen können.

5. Smart Card Connector (10) nach einem oder mehreren der vorhergehenden Ansprüche, wobei der Deckel (12) aus Blech besteht und an seiner Oberseite (120) ausgebildete Rillen (22) aufweist, die an der Deckelunterseite (121) Wölbungen bilden, welche mit den Kontaktelementen (1. 2) zusammenarbeiten.

6. Smart Card Connector (10) nach einem oder mehreren der vorhergehenden Ansprüche, wobei ein zwei Anschlusskontakte (34, 35) aufweisender Kartenanwesenheitsschalters (54) vorgesehen ist und wobei diese Anschlusskontakte (34, 35) auf der gleichen Höhe oder auf dem gleichen Niveau wie die Anschlusskontakte (171, 172) der Kontaktelemente (1, 2) liegen.

7. Smart Card Connector (10) nach einem oder mehreren der vorhergehenden Ansprüche, wobei beidseitig, diametral gegenüber der Deckel (12) jeweils eine Ausnehmung (36, 37) aufweist, um zusammen mit Nocken (46, 47) des Kontaktträgers (1) Deckelverrastungen (38) zu bilden.

8. Smart Card Connector (10) nach einem oder mehreren der vorhergehende Ansprüche, wobei der Kontaktträger (11) als Grundkörper eine aus Kunststoff bestehende Kontaktträgerplatte (39) besitzt, in der etwa mittig eine diese durch setzende Wippenöffnung (92) ausgebildet ist die zur Aufnahme und Lagerung der Wippe (14) dient.

9. Smart Card Connector (10) nach einem oder mehreren der vorhergehenden Ansprüche, wobei die Lesekontaktelemente in die Kontaktträgerplatte (39) eingesetzt und darin verrastet sind.

10. Smart Card Connector (10) nach einem oder mehreren der vorhergehenden Ansprüche, wobei jedes Lesekontaktelement (1, 2) folgendes aufweist:
einen Befestigungsabschnitt (61) benachbart zum Befestigungsabschnitt (61), einen Anschlussabschnitt (62) der an seinem freien Ende einen Anschlusskontakt (als Kontaktende) (63) bildet, wobei sich an den Befestigungsabschnitt (61) ein vorzugsweise abgewinkelt gegenüber dem Befestigungsabschnitt (61) verlaufend ein Lesekontaktabschnitt (64) anschließt, der an seinem höchsten Ende, einen Lesekontakt (65) vorzugsweise in der Form einer Kontaktkuppe (65) bildet.

11. Smart Card Connector (10) nach einem oder mehreren der vorhergehenden Ansprüche, wobei die vorzugsweise aus Kunststoff bestehende Kontaktführung (72) an ihrer Unterseite durch einen Tragabschnitt (74) des Grundkörpers (70) getragen ist, der auf seinen beiden Querseiten Seitenabschnitte (75, 76) aufweist, wobei der Seitenabschnitt (75) ein Teil eines vom Grundkörper (70) gebildeten Seitenarms (60) und der Seitenabschnitt (76) ein Teil eines vom Grundkörper (70) gebildeten Seitenarms (69) ist, wobei der Tragabschnitt (74) ferner vorzugsweise um die Rückseite bzw. die Vorderseite der Kontaktführung (72) herumgelegte Umschließungsabschnitte (77) bzw. (78) bildet, und der vordere Umschließungsabschnitt (78) zwei Schlitze (79, 80) aufweist, in die Nasen (81, 82) des Kunststoffführungskörpers zum Zwecke der Halterung ragen.

12. Smart Card Connector (10) nach einem oder mehreren der vorhergehenden Ansprüche 2 bis 11, wobei die Wippe (14) Lagerabschnitte (83, 84) aufweist und die Lagerabschnitte (83, 84) jeweils einen seitlich nach außen verlaufenden Vorsprung (185) bzw. (186) und jeweils einen nach innen weisenden Ausschnitt (183) bzw. (184) bilden.

13. Smart Card Connector (10) nach einem oder mehreren der vorhergehenden Ansprüche, wobei die Kontaktführung (72) nach oben ragende, bezüglich einander seitlich in Querrichtung beabstandete Vorsprünge (871, 872, 873, 874, 875) derart bildet, dass zwischen diesen jeweils Ansteuerflanken (85), das heißt Anlage/Anhebflächen für die Kontaktelemente (1, 2) ausgebildet sind.

14. Smart Card Connector (10) nach einem oder mehreren der vorhergehenden Ansprüche, wobei die in der Kontaktträgerplatte (39) drehbar gelagerte Wippe (14) in Lagerausnehmungen (93, 94) eingesetzt, eingeschwenkt und in einer Raststellung drehbar verrastet ist.

15. Smart Card Connector (10) nach einem oder mehreren der vorhergehenden Ansprüche, wobei die Drehlagerung der Wippe (14) durch ihre beiden seitlich beabstandeten Lagerabschnitte (83, 84), die mit seitlich beabstandeten Lagerausnehmungen in den entsprechenden Seitenwänden zusammenarbeiten, erfolgt.

## Claims

1. Smartcard connector (10) which has the following:
a contact carrier (11) which carries read contact elements (1, 2), a cover (12) which is fastened, by means of a top face (139) of the contact carrier (11), to the said contact carrier and forms a card receiving space, **characterized in that** the smartcard connector (10) has a read contact element lifting apparatus (14) which is pivotably mounted in the contact carrier, wherein the read contact element lifting apparatus (14) forms contact/lifting surfaces (85, 86), on which the read contact elements (1, 2) rest, for the read contact elements (1, 2), wherein, when a card which strikes the lifting apparatus (14) is pushed in, the read contact elements (1, 2) are lifted and come into contact with the card contacts.

2. Smartcard connector (10) according to Claim 1, wherein the read contact element lifting apparatus (14) is a rocker (14), and wherein the contact/lifting surfaces (85, 86) are in the form of drive edges on the rocker (14).

3. Smartcard connector (10) according to Claim 2, wherein the rocker (14) has a main body which is produced from sheet metal and on which a plastic guide (72), which forms the insulating drive edges, for the read contact elements (1, 2) is fitted and fastened.

4. Smartcard connector (10) according to Claim 1, wherein, in order to avoid overloading the read contacts, the rocker has an end stop as limiting means, so that, when the end stop or the rocker limit of the rocker is reached, additional tolerances of the card and installation can be compensated for by the drive edges of the rocker rebounding.

5. Smartcard connector (10) according to one or more of the preceding claims, wherein the cover (12) is composed of sheet metal and has channels (22) which are formed on its top face (120) and which form curved portions on the cover bottom face (121), the said curved portions cooperating with the contact elements (1, 2).

6. Smartcard connector (10) according to one or more of the preceding claims, wherein a card presence switch (54) which has two connection contacts (34, 35) is provided, and wherein these connection contacts (34, 35) are at the same height or at the same level as the connection contacts (171, 172) of the contact elements (1, 2).

7. Smartcard connector (10) according to one or more of the preceding claims, wherein the cover (12) in each case has a recess (36, 37) diametrically opposite on both sides in order to form cover latching means (38) together with cams (46, 47) of the contact carrier (1).

8. Smartcard connector (10) according to one or more of the preceding claims, wherein the contact carrier (11) as the main body has a contact carrier plate (39) which is composed of plastic and in which a rocker opening (92) which passes through the said contact carrier plate is formed approximately in the centre, the said rocker opening serving to receive and mount the rocker (14).

9. Smartcard connector (10) according to one or more of the preceding claims, wherein the read contact elements are inserted into the contact carrier plate (39) and are latched therein.

10. Smartcard connector (10) according to one or more of the preceding claims, wherein each read contact element (1, 2) has the following:
a fastening section (61) adjacent to the fastening section (61), a connection section (62) which forms a connection contact (as contact end) (63) at its free end, wherein a read contact section (64) which preferably runs at an angle in relation to the fastening section (61) adjoins the fastening section (61), the said read contact section forming, at its highest end, a read contact (65) preferably in the form of a contact dome (65).

11. Smartcard connector (10) according to one or more of the preceding claims, wherein the contact guide (72), which is preferably composed of plastic, is carried at its bottom face by a carrying section (74) of the main body (70) which has side sections (75, 76) on its two lateral faces, wherein the side section (75) is a part of a side arm (60) which is formed by the main body (70), and the side section (76) is a part of a side arm (69) which is formed by the main body (70), wherein the carrying section (74) further preferably forms surrounding sections (77) and respectively (78) which are placed around the rear face or the front face of the contact guide (72), and the front surrounding section (78) has two slots (79, 80) into which lugs (81, 82) of the plastic guide body project for holding purposes.

12. Smartcard connector (10) according to one or more of the preceding Claims 2 to 11, wherein the rocker (14) has bearing sections (83, 84), and the bearing sections (83, 84) each form a projection (185) and respectively (186) which runs laterally outwards, and each form a cutout (183) and respectively (184) which faces inwards.

13. Smartcard connector (10) according to one or more of the preceding claims, wherein the contact guide (72) forms projections (871, 872, 873, 874, 875), which project upwards and are spaced apart with respect to one another laterally in the transverse direction, in such a way that drive edges (85), that is to say contact/lifting surfaces for the contact elements (1,2), are in each case formed between the said projections.

14. Smartcard connector (10) according to one or more of the preceding claims, wherein the rocker (14) which is rotatably mounted in the contact carrier plate (39) is inserted into bearing recesses (93, 94), pivoted in and latched in a rotatable manner in a latching position.

15. Smartcard connector (10) according to one or more of the preceding claims, wherein the rotary bearing of the rocker (14) is performed by its two laterally spaced-apart bearing sections (83, 84) which cooperate with laterally spaced-apart bearing recesses in the corresponding side walls.

## Revendications

1. Connecteur de carte intelligente (10) comportant les éléments suivants:
un support de contact (11) contenant des éléments de contact de lecture (1, 2);
un cache (12) fixé au support de contact (11) via un côté supérieur (139) de celui-ci;
et formant un espace de logement de carte, **caractérisé en ce que** le connecteur de carte intelligente (10) comporte un dispositif de soulèvement d'éléments de contact de lecture (14) disposé de façon à pouvoir pivoter dans le support de contact;
le dispositif de soulèvement d'éléments de contact de lecture (14) formant pour les éléments de contact de lecture (1, 2) des surfaces d'appui/soulèvement (85, 86) sur lesquelles les éléments de contact de lecture (1, 2) reposent;
les éléments de contact de lecture (1, 2) soulevés lors de l'insertion d'une carte arrivant sur les surfaces de soulèvement (14) étant amenés en contact par effleurement avec les contacts de carte.

2. Connecteur de carte intelligente (10) selon la revendication 1, le dispositif de soulèvement d'éléments de contact de lecture (14) étant une bascule (14) et les surfaces d'appui/soulèvement (85, 88) prenant la forme de flancs de commande au niveau de la bascule (14).

3. Connecteur de carte intelligente (10) selon la revendication 2, la bascule (14) comportant un corps de base fabriqué en tôle sur lequel est appliqué et fixé un guide en matière plastique (72) formant les flancs de commande isolants pour les éléments de contact de lecture (1, 2).

4. Connecteur de carte intelligente (10) selon la revendication 1, la bascule possédant une butée d'extrémité servant de délimitation pour éviter une surcharge des contacts de lecture, de sorte que lorsque la butée d'extrémité et/ou la délimitation de bascule de la bascule est atteinte par la mise sous ressort supplémentaire des flancs de commande de la bascule, les tolérances supplémentaires de la carte et du montage peuvent être compensées.

5. Connecteur de carte intelligente (10) selon l'une quelconque des revendications précédentes ou plusieurs d'entre elles, le cache (12) étant réalisé en tôle et comportant des rainures (22) réalisées au niveau de son côté supérieur (120) formant au niveau du côté inférieur de cache (121) des bombements coopérant avec les éléments de contact (1, 2).

6. Connecteur de carte intelligente (10) selon l'une quelconque des revendications précédentes ou plusieurs d'entre elles, un contacteur de présence de carte (54) comportant deux contacts de raccordement (34, 35) étant prévu et ces contacts de raccordement (34, 35) reposant à même hauteur ou au même niveau que les contacts de raccordement (171, 172) des éléments de contact (1, 2).

7. Connecteur de carte intelligente (10) selon l'une quelconque des revendications précédentes ou plusieurs d'entre elles, le cache (12) comportant respectivement un évidement (36, 37) des deux côtés, dans le plan diamétral, pour former conjointement avec les cames (46, 47) du support de contact (1) des clipsages de cache (38).

8. Connecteur de carte intelligente (10) selon l'une quelconque des revendications précédentes ou plusieurs d'entre elles, le support de contact (11) prenant la forme d'un corps de base possédant une plaque de support de contact (39) composée de matière plastique dans laquelle une ouverture de bascule (92) aboutissant en elle de façon approximativement centrale sert à recevoir et à positionner la bascule (14).

9. Connecteur de carte intelligente (10) selon l'une quelconque des revendications précédentes ou plusieurs d'entre elles, les éléments de contact de lecture étant insérés dans la plaque de support de contact (39) et s'encliquetant en elle.

10. Connecteur de carte intelligente (10) selon l'une quelconque des revendications précédentes ou plusieurs d'entre elles, chaque élément de contact de lecture (1, 2) comportant les éléments suivants:
une section de fixation (61) connexe à la section de fixation (61), une section de raccordement (62) formant au niveau de son extrémité libre un contact de raccordement (63) (prenant la forme d'une extrémité de contact), une section de contact de lecture (64) s'étendant de préférence de façon coudée par rapport à la section de fixation (61) se raccordant à la section de fixation (61), ladite section de contact de lecture formant au niveau de son extrémité la plus haute un contact de lecture (65) prenant de préférence la forme d'un embout de contact (65).

11. Connecteur de carte intelligente (10) selon l'une quelconque des revendications précédentes ou plusieurs d'entre elles, le guide de contact (72) composé de préférence de matière plastique étant supporté au niveau de son côté inférieur par une section portante (74) du corps de base (70) comportant sur ses deux côtés transversaux des sections latérales (75, 76), la section latérale (75) étant une partie d'un bras latéral (60) formé par le corps de base (70) et la section latérale (76) étant une partie d'un bras latéral (69) formé par le corps de base (70), la section portante (74) formant de préférence les sections alentour (77) et/ou (78) placées autour du côté arrière et/ou du côté avant du guide de contact (72) et la section alentour (78) avant comportant deux fentes (79, 80) prévues dans les becs (81, 82) du corps de guide en matière plastique servant à la fixation.

12. Connecteur de carte intelligente (10) selon l'une quelconque des revendications 2 à 11 ou plusieurs d'entre elles, la bascule (14) comportant des sections de palier de roulement (83, 84) et les sections de palier de roulement (83, 84) formant respectivement une saillie (185) et/ou (186) s'étendant en côté vers l'extérieur et formant respectivement un détouré (183) et/ou (184) orienté vers l'intérieur.

13. Connecteur de carte intelligente (10) selon l'une quelconque des revendications précédentes ou plusieurs d'entre elles, le guide de contact (72) saillant vers le haut, par rapport aux saillies (871, 872, 873, 874, 875) espacées les unes par rapport aux autres en côté dans la direction transversale de telle sorte que les flancs de commande (85), c'est-à-dire les surfaces d'appui/soulèvement prévues pour les éléments de contact (1, 2), sont réalisés entre lesdites saillies.

14. Connecteur de carte intelligente (10) selon l'une quelconque des revendications précédentes ou plusieurs d'entre elles, la bascule (14) disposée de façon à pouvoir pivoter dans la plaque de support de contact (39) étant insérée dans les évidements de palier de roulement (93, 94), pivotée et encliquetée de façon à pouvoir tourner dans une position d'encliquetage.

15. Connecteur de carte intelligente (10) selon l'une quelconque des revendications précédentes ou plusieurs d'entre elles, la position de rotation de la bascule (14) se produisant à travers ses deux sections de palier de roulement (83, 84) espacées en côté coopérant dans les parois latérales correspondantes avec les évidements de palier de roulement espacés en côté.
